# EUROPEAN PATENT APPLICATION

(11) **EP 2 091 203 A1**
(43) Date of publication of application: **19.08.2009**
(21) Application number: 08002517.4
(22) Date of filing: 12.02.2008
(51) Int. Cl.: H04L 29/06

(54) **Method and system for transmitting a multimedia stream**

(71) Applicant: Koninklijke KPN N.V., 2516 CK The Hague (NL); Nederlandse Organisatie voor Toegepast-Natuurwetenschappelijk Onderzoek TNO, 2628 VK Delft (NL)
(72) Inventor: Walrauen, Fabian Arthur, 9711 VM Groningen (NL); Stokking, Hans Maarten, 2545 HK The Hague (NL); van Deventer, Mattijs Oskar, 2264 DL Leidschendam (NL); Niamut, Omar Aziz, 3131 HV Vlaardingen (NL)
(74) Representative: Wuyts, Koenraad Maria

(57) **Abstract**

A method is described for transmitting a multimedia stream from a first end-terminal to a second end-terminal. The first and second end-terminal are connected to at least one gateway for enabling the multimedia stream to be transmitted from the first end-terminal to the second end-terminal. The method comprising the steps of: the first end-terminal inviting the gateway to set up a first multimedia session between the first end-terminal and the gateway, the first multimedia session being controlled by a first protocol; the gateway notifying - in response to the invitation - the second end-terminal of the pending invitation; the second end-terminal setting up - in response to the notification - a second multimedia session between the second end-terminal and the gateway, the second multimedia session being controlled by a second protocol; the gateway setting up - in response to the invitation -the first multimedia session; and transmitting a multimedia stream from the first end-terminal to the second end-terminal. The first protocol may be SIP, the second protocol may be RTSP.

## Description

### Field of the invention

The invention relates to a method and a system for transmitting a multimedia stream from a first end-terminal to a second-end terminal. In particular, the invention relates to a method and system for transmitting a multimedia stream from a first end-terminal to a second-end terminal in a multimedia session which is set up by the first end-terminal. The invention further relates to a gateway for use in such system.

### Background of the invention

IP Multi-Media Subsystem (IMS) defined by the 3GPP and 3GPP2 standards open the door to a whole range of new multimedia services, such as Voice over IP (VoIP) and IPTV. The IMS service architecture enables to combine multimedia services of various types.

One type of services may enable viewers at home to participate real-time in a live TV show using e.g. a webcam at home. The multimedia streams generated by the webcam are transported from the home-located user over an IP network to the TV studio using the Real-time Transport Protocol (RTP). In an IMS based architecture such multimedia sessions between clients are set up using the Session Initiation Protocol (SIP), whereas the Real Time Streaming Protocol (RTSP) is typically used for streaming multimedia content from a server to a client.

Systems that provide an interface between SIP and RTSP systems, usually referred to as SIP-RTSP gateways, are known. Within ETSI TISPAN Standardisation (WI2048, TS 182 027) an architecture is proposed in which an end-terminal, e.g. a set-top box, a personal computer, a personal digital assistant (PDA) or a mobile telephone with multi-media capabilities, can use SIP to set up a multimedia session with a selected content provider. After establishment of the session, RTSP is used to select, retrieve and control the streamed content. Further, the University of Colombia (Kundan Singh and Henning Schulzrinne, "Unified Messaging using SIP and RTSP", IP Telecom Services Workshop, Sept 2000, Atlanta, Georgia, US) has developed a SIP-RTSP Gateway for multimedia unified messaging.

These systems use SIP and RTSP clients at the user side and SIP and RTSP servers in the network thereby enabling a user to set up a multimedia session in which multimedia content is streamed to the user.

One problem related to these known systems is that they do not provide the functionality needed for the above mentioned services, which require the user to set up a multimedia session such that user-generated content is streamed from the user to the studio. Further, some applications may require the user to have RTSP server functionality.

### Summary of the invention

It is an object of the invention to reduce or eliminate at least one of the drawbacks known in the prior art and to provide a method and system for transmitting a multimedia stream from a first end-terminal to a second end-terminal.

In one embodiment of the invention a first end-terminal is connected to a second end-terminal. Further, the first and second end-terminal are connected to at least one gateway for enabling the multimedia stream to be transmitted from the first end- terminal to the second end-terminal. The method comprises the steps of: (i) the first end-terminal inviting the gateway to set up a first multimedia session between the first end-terminal and the gateway, the first multimedia session being controlled by a first protocol; (ii) the gateway notifying - in response to the invitation - the second end-terminal of the pending invitation; (iii) the second end-terminal setting up - in response to the notification - a second multimedia session between the second end-terminal and the gateway, the second multimedia session being controlled by a second protocol; (iv) the gateway setting up - in response to the invitation - the first multimedia session; and (v) transmitting a multimedia stream from the first end-terminal to the second end-terminal.

The method thus allows the user of a first end-terminal, which uses a first multimedia protocol, to stream real-time user-generated content to a second end-terminal, which uses a second multimedia protocol, where both the first and second end-terminal act as a client.

In the method a gateway is capable of connecting a first end-terminal supporting a first protocol, e.g. SIP, to a second end-terminal supporting a second protocol, e.g. RTSP. Towards the first end-terminal, i.e. the (originating) SIP client at the user side, the gateway acts as (terminating) SIP client. The gateway confirms that it is able to receive the multimedia session from the user and provides first end-terminal with multimedia session information. Towards the second end-terminal, i.e. the RTSP client, the gateway acts as RTSP server on behalf of the user, using RTSP for session control.

The gateway informs the second end-terminal that an incoming session is pending and notifies the RTSP client to connect to the RTSP server function of the gateway.

The gateway thus acts as a server for both SIP and RTSP and uses a notification message for connecting to the second end-terminal RTSP client. This message acts as a trigger message and ensures that legacy SIP clients from the user and RTSP clients from the studio can be connected in order to enable user-generated content to be transmitted from the first end-terminal to the second-end terminal.

In one embodiment the first protocol is the Session Initiation Protocol (SIP). In a further embodiment the first-end terminal transmits an SIP INVITE to the gateway.

In a further embodiment the second protocol is the Real Time Streaming Protocol (RTSP).

In yet another embodiment the gateway transmits a notification message, preferably an RTSP notification message, to the second-end terminal in response to invitation of the first end-terminal, in order to activate the second end-terminal to set up the second multimedia session between the second end-terminal and the gateway.

In one embodiment the method comprises the steps of:
- the first-end terminal transmitting first multimedia session information to the gateway; - the gateway transmitting the first multimedia session information to the second-end terminal.

In another embodiment the method comprises the steps of: -the second-end terminal transmitting second multimedia session information to the gateway; - the gateway transmitting the second multimedia session information to the first-end terminal. The first multimedia session information and/or second multimedia session information is in a further embodiment transmitted using the Session Description Protocol (SDP).

In yet another embodiment the first end-terminal comprises a SIP client and/or the second end-terminal comprises an RTSP client.

In a further embodiment the invention relates to a method for transmitting a multimedia stream from a first end-terminal to a second end-terminal, wherein the first and second end-terminal are connected to a first and a second gateway respectively. The gateways are capable of setting up a multimedia session between the first and second end-terminal. The method comprises the steps of: (i) the first gateway preparing the first end-terminal for setting up a multimedia session with the second end-terminal, wherein a first protocol is used for the preparation of the first end-terminal; (ii) the first gateway inviting the second gateway to set up the multimedia session between the first end-terminal and the second end-terminal, the multimedia session being set up by a second protocol; (iii) the second gateway notifying - in response to the invitation - the second end-terminal to prepare the multimedia session with the first end-terminal wherein the first protocol is used for preparation of the second end-terminal; (iv) setting up - in response to the invitation - a multimedia session between first end-terminal and the second end-terminal; and (v) transmitting a multimedia stream from the first end-terminal to the second end-terminal.

In this embodiment the purpose of the first SIP-RTSP gateway at the user location and the second SIP-RTSP gateway at the studio location is to exchange the correct RTP information (IP addresses, port number, SDP session description, etc.) between the legacy SIP and RTSP functions. This allows the RTP stream to be set-up and controlled by the SIP session and enables the user to trigger the TV studio to retrieve the streamed user-generated content. The RTSP protocol may be used to control the RTP stream.

In one embodiment the first protocol may be the Real Time Streaming Protocol (RTSP). In another embodiment the second protocol is the Session Initiation Protocol (SIP).

In a further embodiment the second gateway transmits a notification message, preferably an RTSP TRIGGER message, to the second-end terminal in response to the invitation of the first gateway, in order to activate the second end-terminal to set up the multimedia session between the first end-terminal and the second end-terminal.

In one embodiment the method further comprises the steps of: -the first gateway receiving first multimedia session information from the first end-terminal using the SDP protocol encapsulated in the first protocol and transmitting the first multimedia session information to the second gateway using the SPD protocol encapsulated in the second protocol; and -the second gateway receiving the first multimedia session information from the first gateway and transmitting the first multimedia session information to the second end- terminal using the SDP protocol encapsulated in the first protocol.

In another embodiment the method further comprises the steps of: - the second gateway receiving in response to the receipt of the first multi media session information second multimedia session information from the second end-terminal using the SDP protocol encapsulated in the first protocol and transmitting the second multimedia session information to the first gateway using the SPD protocol encapsulated in the second protocol; - the second gateway receiving the second multimedia session information from the second gateway and transmitting the second multimedia session information to the first end-terminal using the SDP protocol encapsulated in the first protocol.

The transmission of the multimedia stream from the first end-terminal to the second end-terminal is in one embodiment controlled by the RTSP protocol.

In a further embodiment the first end-terminal comprises a RTSP server connected to the first gateway and/or the second end-terminal comprises an RTSP client connected to the second gateway.

In further aspect the invention relates to a system for transmitting a multimedia stream from a first end-terminal to a second end-terminal. In one embodiment the system comprises: a first end-terminal and second end-terminal connected to at least one gateway, wherein the first end-terminal comprises (i) means for inviting the gateway to set up a first multimedia session with the first end-terminal, wherein the first multimedia session is controlled by a first protocol and (ii) means for transmitting a multimedia stream in the first multimedia session to the gateway; and wherein the gateway comprises (iii) means for notifying - in response to the invitation of the first end-terminal - to set up a second multimedia session between the gateway and the second end-terminal, the second multimedia session being controlled by a second protocol, (iv) means for setting up - in response to the invitation - the first multimedia session and (v) means for transmitting a multimedia stream to the second end-terminal.

In a further embodiment a system is provided for transmitting a multimedia stream from a first end-terminal to a second end-terminal. The system comprises a first end-terminal and second end-terminal connected to a first and a second gateway respectively. The gateways are capable of setting up a multimedia session between the first and second end-terminal, wherein the first gateway comprises: (i) means for preparing the first end-terminal for setting up a multimedia session with the second end-terminal wherein a first protocol is used for the preparation of the first end-terminal; (ii) means for inviting the second gateway to set up the multimedia session between the first end-terminal, the multimedia session being set up using a second protocol; wherein the second gateway comprises: (iii) means for notifying the second end-terminal - in response to the invitation - to prepare the multimedia session with the first end-terminal, wherein the first protocol is used for the preparation of the second end-terminal and (iv) means for setting up - in response to the invitation - a multimedia session between first end-terminal and the second end-terminal.

The invention will be further illustrated with reference to the attached drawing, which schematically show embodiments according to the invention. It will be understood that the invention is not in any way restricted to these specific embodiments.

### Brief description of the drawings

Fig. 1 illustrates an exemplary system in which the present invention may be used.
Fig. 2 depicts a simplified exemplary flow of information using the SIP protocol.
Fig. 3 depicts an exemplary flow of information using the RTSP protocol.
Fig. 4 depicts an exemplary embodiment of the invention.
Fig. 5 depicts the flow of information between a SIP client, a SIP-RTSP gateway and a RTSP client in exemplary embodiments of the invention.
Fig. 6 depicts another exemplary embodiment of the invention.
Fig. 7 illustrates the protocol flow of a session call in an exemplary embodiment of the invention.
Fig. 8 schematically depicts exemplary embodiments of a gateway at the user location and the studio location respectively.

### Detailed description

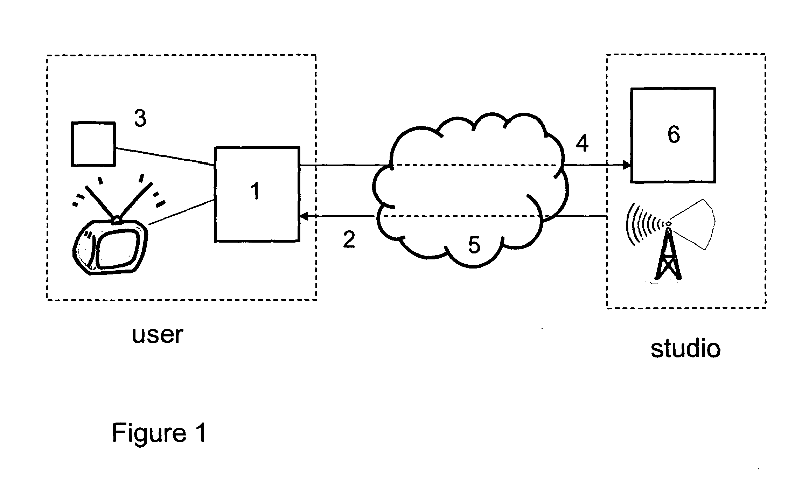

**Fig. 1** illustrates an exemplary system in which the present invention may be used. At the home-location a first end-terminal 1, e.g. a set-top box, is connected to display device, e.g. a television. Further, the end-terminal receives a TV signal **2,** which is broadcasted by the television studio and which comprises a programme providing live multimedia participation with home-located user. In one embodiment the multimedia participation of the user may be realized using e.g. a web-cam **3** connected to the end-terminal. The multimedia stream **4** generated by the web-cam is streamed over an IP network **5** to a second end-terminal **6** located at the TV studio. At the TV studio the second end-terminal 6 receives the user-generated multimedia stream 4. This way a live video feed from the user to the studio is provided.

Such a service requires (i) a home-located user to be able to set up a multimedia session between the home-located, first end-terminal **1** and the second end-terminal **6** located at the studio, wherein the multimedia session allows transportation of the user-generated multimedia stream **4** to the studio, and (ii) to allow the studio to control (e.g. play, pause, stop) the multimedia stream send by the home-located end-terminals.

It is understood that the system at the home location allowing multimedia participation as described in connection with Fig. 1 may be realized in various alternative ways. Those skilled in the art will understand that the end-terminal, the display device and the web-cam may be for instance integrated in a personal computer, a digital assistant (PDA), a mobile telephone with multi-media capabilities.

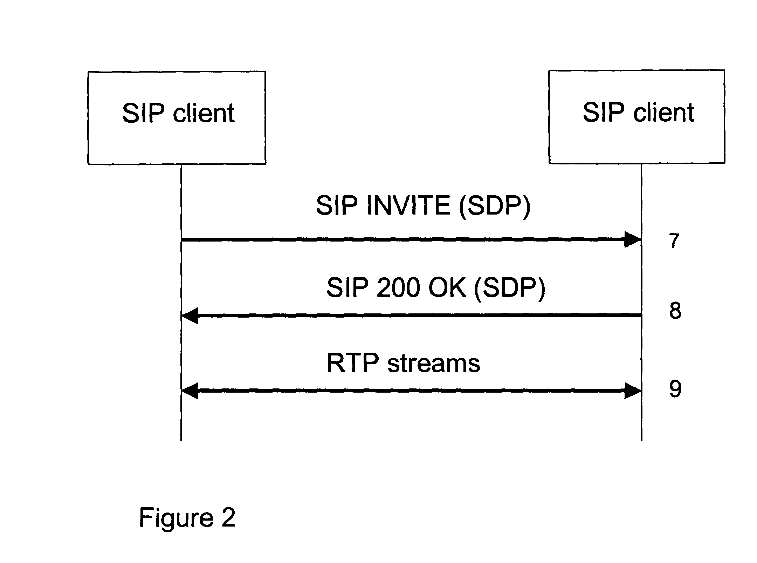

In an IMS architecture SIP is used to set up a multimedia session between two SIP clients e.g. two IP phones. An exemplary flow using the SIP protocol is depicted in **Fig. 2****.** Typically a first SIP client sends a SIP INVITE 7 to the second SIP client, which in return accepts the invention by transmitting a SIP 200 OK **8** message to the first SIP client. Both messages may carry information about the multimedia session. This information is exchanged using the Session Description Protocol (SDP), which may be encapsulated in the SIP protocol. The multimedia session information includes amongst others IP addresses, port numbers for the RTP streams, the type of media (voice, audio, video, etc.) and codec information. Thereafter, multimedia streams are transported between the SIP clients using the RTP protocol **9.**

SIP however is designed for setting up and supporting interactive media sessions. Although SIP also provide a form of aggregate streaming control (i.e. the ability to control multiple streams from different locations with one control session), it does not provide an efficient control as provided by the RTSP protocol used in streaming applications such as Video on Demand (VoD). RTSP allows a client to remotely control a streaming media server by issuing VCR-like commands e.g. play, pause, stop, etc. and allows time-based access to files on a server. Moreover, legacy equipment requires the use of RTSP.

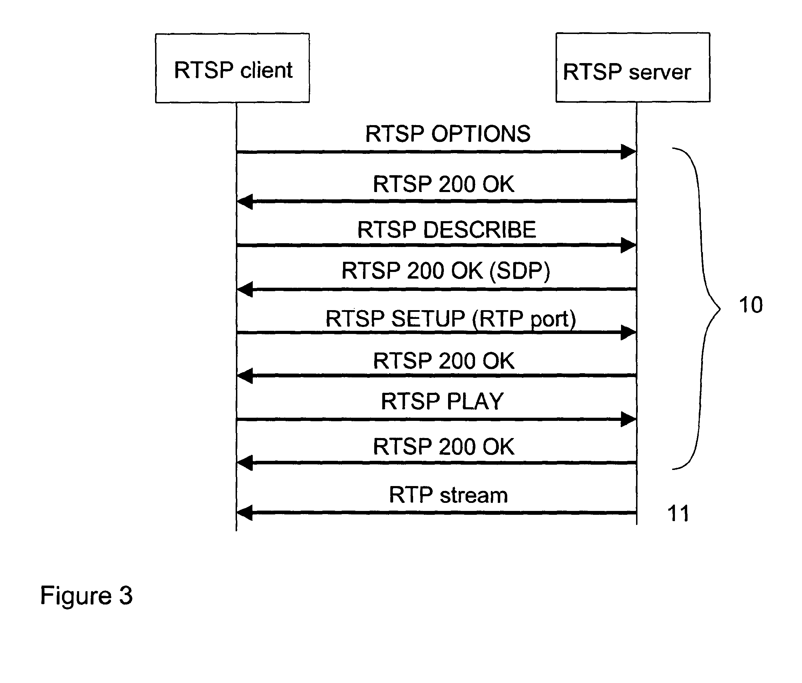

**Fig. 3** schematically depicts an exemplary flow using the RTSP protocol. In order to set up an RTSP multimedia session between an RTSP client and an RTSP server, standard RTSP messages **10** (OPTIONS, DESCRIBE, SETUP, PLAY) are exchanged between the client and the server in order to provide both sides with information required for an RTSP session. Similar to SIP this information is exchanged using the Session Description Protocol (SDP), which may be encapsulated in the RTSP protocol. Once the session is set up a stream is transported from the server to the client **11,** using the RTP protocol, wherein RTSP allows the client to control the streaming.

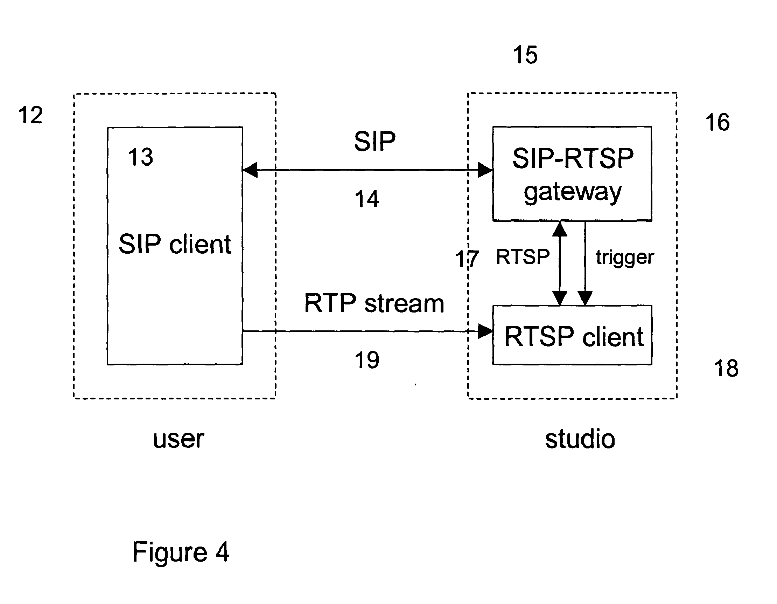

**Fig. 4** depicts a schematic of system representing an exemplary embodiment according to the invention. In this embodiment a home located first end-terminal **12** comprises a SIP client **13,** which is capable to set up a SIP session **14** with an SIP-RTSP gateway **15.** The SIP-RTSP gateway may be located in a second end-terminal **16** at the TV studio.

Towards the (originating) SIP client at the user side, the gateway acts as a (terminating) SIP client. The gateway confirms that it is able to receive the multimedia session from the user and informs the SIP client at the user side on the session details and the RTP port number. This session information may be exchanged using the SDP protocol, which may be encapsulated in the SIP messages.

The gateway is further capable of setting up an RTSP session **17** with an RTSP client **18** at the location of the studio. To this end, the gateway is able to send a trigger message to the RTSP client in response to the invitation to set-up the SIP session. This RTSP client may be located in the second end-terminal, or, alternatively, may be located at a server connected to the second end-terminal.

Hence, towards the RTSP client 18 at the studio, the SIP-RTSP gateway acts as an RTSP server on behalf of the user, thereby allowing the studio to have RTSP session control over the RTP stream **19,** which is transported from the home-located end-terminal to the end-terminal at the studio.

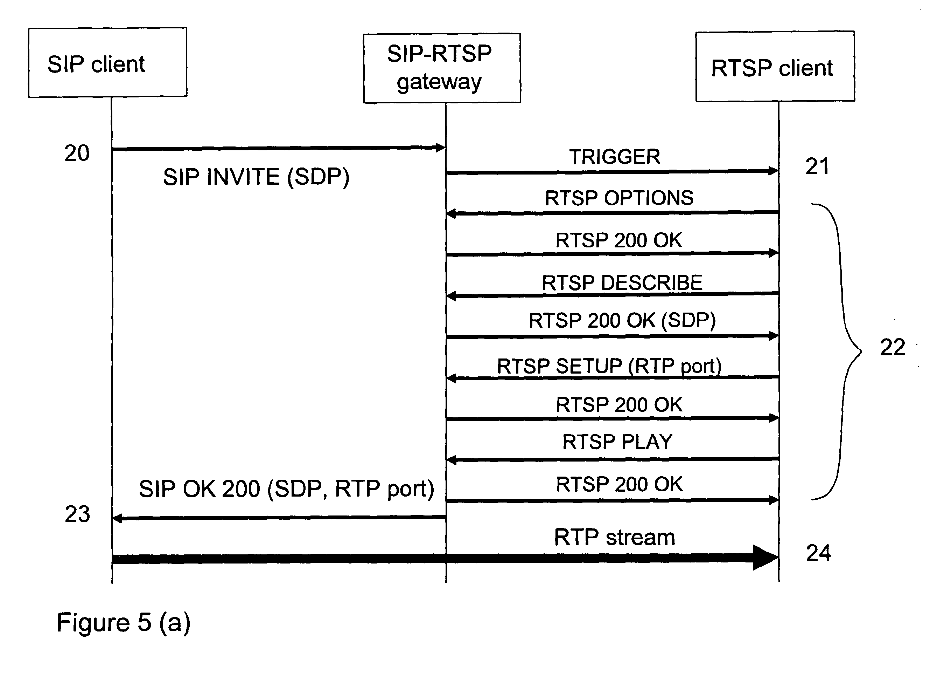

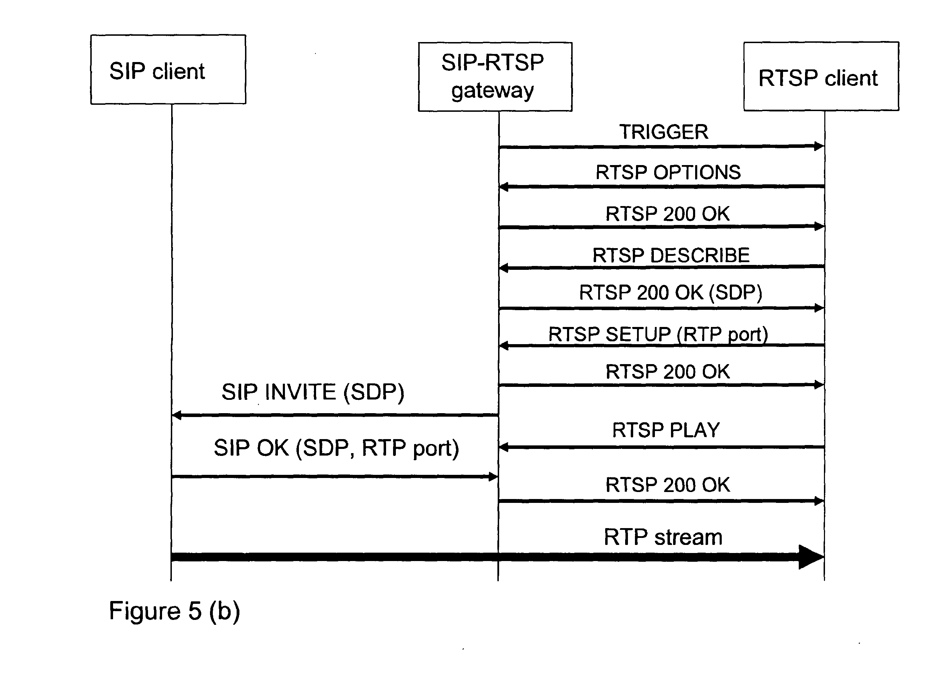

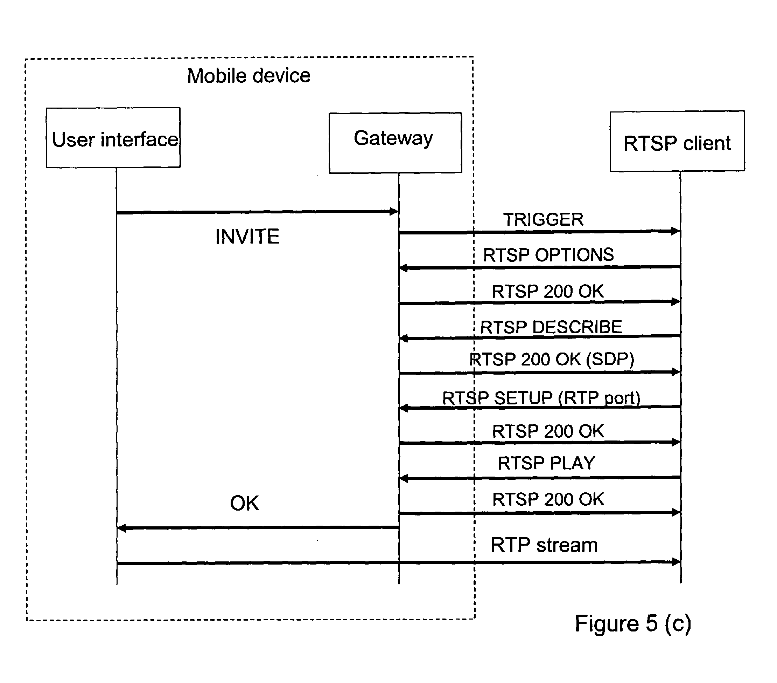

**Fig 5** illustrates the flow of information between the SIP client, the SIP-RTSP gateway and the RTSP client in more detail. Figure 5(a) represents an embodiment wherein the session between the user and the studio is initiated by the user.

In a first step **20,** the SIP client in the first end-terminal at the user side sends an SIP INVITE to the gateway indicating that it wants to stream a multimedia stream to the studio. In a second step **21** the gateway accepts the invitation and in response triggers the RTSP client, which may be located in the second end-terminal at the studio, to start an RTSP session with the SIP-RTSP gateway. This trigger may have the form of a trigger message, for example an RTSP TRIGGER message, which may be an extension of the existing RTSP protocol.

Alternatively, the trigger message may be passed to the RTSP client using a proprietary application programming interface (API) or a control interface on the RTSP client. Such interfaces may simulate a "user" requesting a multimedia stream.

Thereafter, in a third step **22,** the gateway handles the usual RTSP information exchanges with the RTSP client transmitting the SDP information to the RTSP client and retrieving from the RTSP client the correct RTP port to which the RTP stream should be sent to. In a fourth step **23,** the gateway confirms the SIP session to the SIP client using a SIP 200 OK message and provides the SIP client with the RTP port number and confirms the SDP information. Finally, in the fifth and last step **24,** the SIP client starts streaming the RTP multimedia stream to the RTSP client.

The termination of the combined SIP/RTSP session (not depicted in Fig. 5) may be handled in a similar way as the initiation of such session described above. If the user indicates that he wants to terminate the session, the gateway may convert an SIP BYE message to an RTSP REDIRECT message (without location header). The RTSP REDIRECT message can be found in a draft of a updated RTSP version (see Internet draft RFC 2326 version 16 of the Real Time Streaming Protocol 2.0 dated 19 November 2007 by Schulzrinne et al). If the studio indicates that it wants to terminate the session, the gateway converts an RTSP REDIRECT message to a SIP BYE message.

In an further embodiment the session may initiated by the gateway in the studio. In that case the gateway sends upon reception of an indication by the studio to set up a session the trigger message to the RTSP client and invites the SIP client at the user location to set up a SIP session. The flow of information between the SIP client, the gateway and the RTSP client is schematically depicted in Fig. 5(b).

In yet a further embodiment the gateway may be located in the first end-terminal. In that case the first protocol may be an internal protocol. The session may be triggered by a stimulus of the user interface of the first end-terminal. This scheme is schematically depicted in Fig. 5(c), wherein the first end-terminal may be an mobile device. Alternatively, the stimulus received by the first end-terminal may also come from an external source. In that case for example an SMS message received by the mobile device may trigger a session.

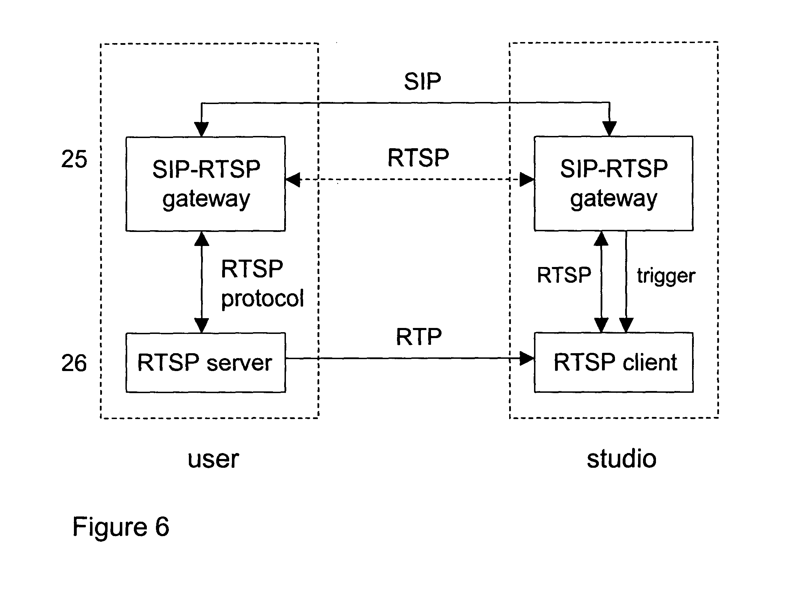

In addition to the gateway present at the studio an SIP-RTSP gateway may be present at the user side. This additional gateway may be located in the home-located first end-terminal. **Fig. 6** depicts the architecture of a system according to this embodiment. The first end-terminal comprises an SIP client to set up SIP sessions with the gateway at the studio, wherein the SIP client has SIP-RTSP gateway functionality **25.** Further, first end-terminal comprises a legacy RTSP server **26** to stream user-generated content to the studio. Optionally, the user-generated content may be controlled by the RTSP protocol (as indicated by the dotted line in Fig.6). The RTSP server may be located in the first end-terminal or, alternatively, located externally to the end-terminal in a server connected to the first end-terminal. The configuration of the SIP/RTSP functionality at the TV studio is the same as the embodiment described above in connection with Fig.5.

In this embodiment the purpose of the first SIP-RTSP gateway at the user location and the second SIP-RTSP gateway at the studio location is to exchange the correct RTP information (IP addresses, port number, SDP session description, etc.) between the legacy SIP and RTSP functions. This allows the RTP stream to be set-up and controlled by the SIP session and enables the user to trigger the TV studio to retrieve the streamed user-generated content. Optionally, the RTSP protocol may be used to control the RTP stream.

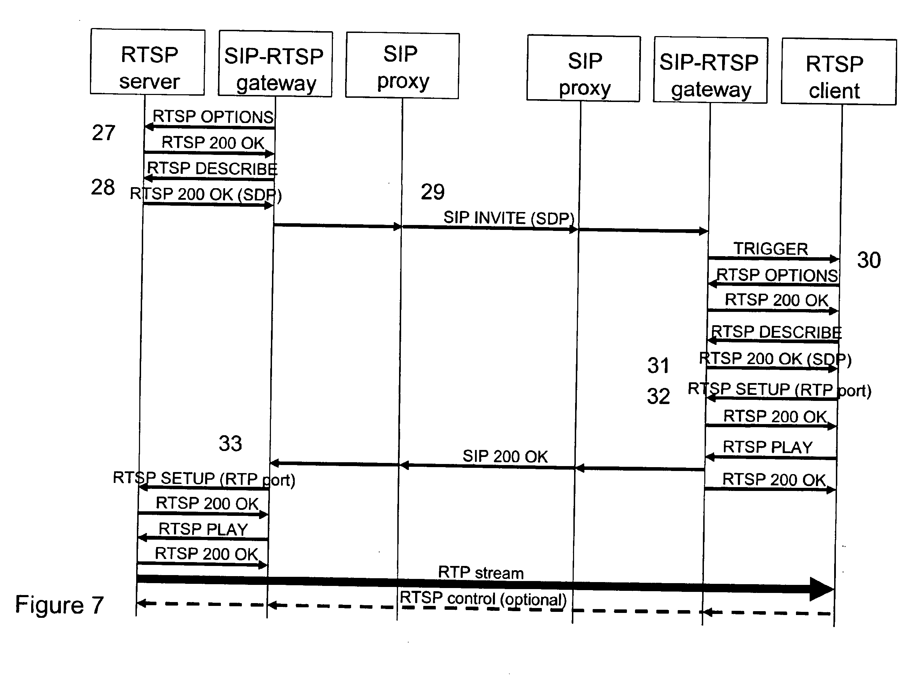

**Fig. 7** illustrates the information flow of a session call in a system as schematically depicted in Fig. 6. In a first step **27,** the first SIP-RTSP gateway at the user-side prepares the RTSP server at the user location to set-up a session with the RTSP client at the studio location. In a second step **28,** the RTSP server confirms the invitation of the first gateway with an RTSP 200 OK message and provides the gateway with the required SDP information. Then, in a third step **29,** the first gateway at the user-side sends an SIP INVITE with SDP multimedia session information to the second SIP-RTSP gateway at the studio location. This SIP message may be routed through one or more SIP proxy's. In a fourth step **30,** the gateway at the studio-side sends an TRIGGER message to RTSP client at the studio location and provides the RTSP client in a fifth step **31** with the SDP information. Thereafter, in a sixth step **32,** the RTSP client provides the second gateway with SDP multimedia session information, e.g. RTP port information required to set-up the multimedia session. Further, the second gateway sends the SDP multimedia session information in a seventh step **33** using an SIP OK message to the first gateway at the user-side. The first gateway forwards the session information to the RTSP server.

Once the SIP and RTSP sessions are set up, an RTP stream is sent from the RTSP server to the RTSP client. The first and second gateway may go into an RTSP proxy mode, wherein the gateways just monitors the RTSP messages. The studio can control the user-generated RTP stream using SIP or, preferably, using RTSP by using the proxyed RTSP link between the RTSP client comprised in the end-terminal at the studio-side and the RTSP server comprised in the end-terminal at the user side. Either side, user or studio, can release the combined SIP/RTSP session using an SIP BYE and an RTSP REDIRECT message respectively.

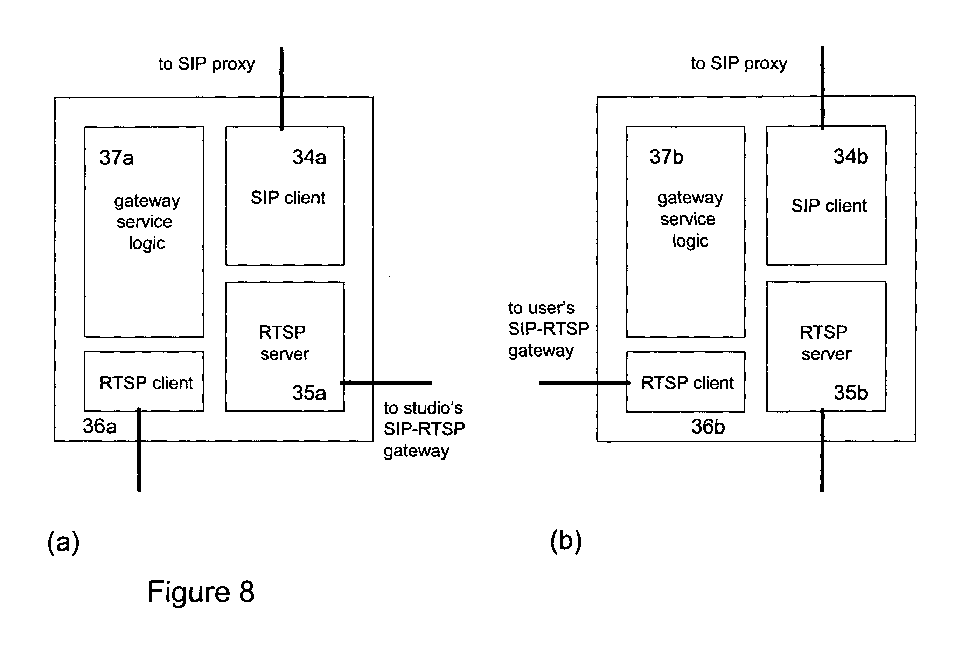

Fig. 8 (a) and (b) schematically depict exemplary embodiments of a gateway at the user side and the studio side respectively. Both gateways have SIP client functionality **34a,34b,** RTSP server logic **35a,35b** and RTSP client logic **36a,36b.**

The gateways have both their own different service logic **37a,37b.** The user gateway may be triggered by actions of the user or other external sources. Its service logic enables the user to set up a combined SIP/RTSP session with the studio. The studio gateway has an external control function, which enables the studio to turn the gateway on when it is ready to receive user-generated content, and turn it off when the show is over. The studio RTSP client is a normal RTSP client. The studio may instruct the client to request the user's RTSP server to play, pause or stop.

The invention is not limited to the embodiments described above, which may be varied within the scope of the accompanying claims. For instance, the term studio should not be interpreted as only meaning a professional broadcast studio. A studio within the meaning of this invention relates to all systems which could provide multimedia functionality similar to a studio, e.g. a personal computer system or another multimedia system which is capable of streaming live content to a user at a home location and in response receiving user-generated content from the user.

## Claims

1. Method for transmitting a multimedia stream from a first end-terminal to a second end-terminal, wherein the first and second end-terminal are connected to at least one gateway for enabling the multimedia stream to be transmitted from the first end-terminal to the second end-terminal, the method comprising the steps of:
- the first end-terminal inviting the gateway to set up a first multimedia session between the first end-terminal and the gateway, the first multimedia session being controlled by a first protocol;
- the gateway notifying - in response to the invitation - the second end-terminal of the pending invitation;
- the second end-terminal setting up - in response to the notification - a second multimedia session between the second end-terminal and the gateway, the second multimedia session being controlled by a second protocol;
- the gateway setting up - in response to the invitation - the first multimedia session;
- transmitting a multimedia stream from the first end-terminal to the second end-terminal.

2. Method according to claim 1, wherein the first protocol is the Session Initiation Protocol (SIP).

3. Method according to claim 2, wherein the first-end terminal transmits a SIP INVITE to the gateway.

4. Method according to claim 1, wherein the second protocol is the Real Time Streaming Protocol (RTSP).

5. Method according to any of claims 1-4, wherein the gateway transmits a notification message, preferably an RTSP notification message, to the second-end terminal in response to invitation of the first end-terminal, in order to activate the second end-terminal to set up the second multimedia session between the second end-terminal and the gateway.

6. Method according to any of claims 1 to 5, method further comprising:
- the first-end terminal transmitting first multimedia session information to the gateway;
- the gateway transmitting the first multimedia session information to the second-end terminal.

7. Method according to any of claims 1 to 6, method further comprising:
- the second-end terminal transmitting second multimedia session information to the gateway;
- the gateway transmitting the second multimedia session information to the first-end terminal.

8. Method according to claims 6 or 7, wherein the first multimedia session information and/or second multimedia session information is transmitted using the Session Description Protocol (SDP).

9. Method according to any of claims 1 to 8 wherein the first end-terminal comprises a SIP client and/or the second end-terminal comprises an RTSP client.

10. Method for transmitting a multimedia stream from a first end-terminal to a second end-terminal, wherein the first and second end-terminal are connected to a first and a second gateway respectively, the gateways being capable of setting up a multimedia session between the first and second end-terminal, the method comprising the steps of:
- the first gateway preparing the first end-terminal for setting up a multimedia session with the second end-terminal, wherein a first protocol is used for the preparation of the first end-terminal;
- the first gateway inviting the second gateway to set up the multimedia session between the first end-terminal and the second end-terminal, the multimedia session being set up by a second protocol;
- the second gateway notifying - in response to the invitation - the second end-terminal to prepare the multimedia session with the first end-terminal wherein the first protocol is used for preparation of the second end-terminal;
- setting up - in response to the invitation - a multimedia session between first end-terminal and the second end-terminal;
- transmitting a multimedia stream from the first end-terminal to the second end-terminal.

11. Method according to claim 10, wherein the first protocol is the Real Time Streaming Protocol (RTSP).

12. Method according to claims 10 or 11, wherein the second protocol is the Session Initiation Protocol (SIP).

13. Method according to any of claims 10-12, wherein the second gateway transmits a notification message, preferably an RTSP TRIGGER message, to the second-end terminal in response to the invitation of the first gateway, in order to activate the second end-terminal to set up the multimedia session between the first end-terminal and the second end-terminal.

14. Method according to any of claims 10 to 13, the method further comprising:
- the first gateway receiving first multimedia session information from the first end-terminal using the SDP protocol encapsulated in the first protocol and transmitting the first multimedia session information to the second gateway using the SPD protocol encapsulated in the second protocol;
- the second gateway receiving the first multimedia session information from the first gateway and transmitting the first multimedia session information to the second end-terminal using the SDP protocol encapsulated in the first protocol.

15. Method according to 14, the method further comprising:
- the second gateway receiving in response to the receipt of the first multi media session information second multimedia session information from the second end-terminal using the SDP protocol encapsulated in the first protocol and transmitting the second multimedia session information to the first gateway using the SPD protocol encapsulated in the second protocol;
- the second gateway receiving the second multimedia session information from the second gateway and transmitting the second multimedia session information to the first end-terminal using the SDP protocol encapsulated in the first protocol.

16. Method according to any of claims 10 to 15
wherein the transmission of the multimedia stream from the first end-terminal to the second end-terminal is controlled by the RTSP protocol.

17. Method according to any of claims 10 to 16
wherein the first end-terminal comprises a RTSP server connected to the first gateway and/or the second end-terminal comprises an RTSP client connected to the second gateway.

18. System for transmitting a multimedia stream from a first end-terminal to a second end-terminal, comprising:
a first end-terminal and second end-terminal connected to at least one gateway,
wherein the first end-terminal comprises (i) means for inviting the gateway to set up a first multimedia session with the first end-terminal, wherein the first multimedia session is controlled by a first protocol and (ii) means for transmitting a multimedia stream in the first multimedia session to the gateway;
wherein the gateway comprises (iii) means for notifying - in response to the invitation of the first end-terminal - to set up a second multimedia session between the gateway and the second end-terminal, the second multimedia session being controlled by a second protocol, (iv) means for setting up - in response to the invitation - the first multimedia session and (v) means for transmitting a multimedia stream to the second end-terminal.

19. System for transmitting a multimedia stream from a first end-terminal to a second end-terminal, comprising a first end-terminal and second end-terminal connected to a first and a second gateway respectively, the gateways being capable of setting up a multimedia session between the first and second end-terminal,
wherein the first gateway comprises means for preparing the first end-terminal for setting up a multimedia session with the second end-terminal wherein a first protocol is used for the preparation of the first end-terminal;
means for inviting the second gateway to set up the multimedia session between the first end-terminal, the multimedia session being set up using a second protocol;
wherein the second gateway comprises means for notifying the second end-terminal - in response to the invitation - to prepare the multimedia session with the first end-terminal, wherein the first protocol is used for the preparation of the second end-terminal and means for setting up - in response to the invitation - a multimedia session between first end-terminal and the second end-terminal.
